# EUROPEAN PATENT APPLICATION

(11) **EP 0 570 010 A1**
(43) Date of publication of application: **18.11.1993**
(21) Application number: 93107906.5
(22) Date of filing: 14.05.1993
(51) Int. Cl.: G03G 15/02, C08G 77/34

(54) **Silicone rubber roller for electrophotography and method of producing the same**

(30) Priority: 14.05.1992 JP 122231/92
(71) Applicant: SUMITOMO RUBBER INDUSTRIES LIMITED, Chuo-ku Kobe-shi Hyogo 651 (JP)
(72) Inventor: Yamazaki, Yuji, Akashi-shi, Hyogo 674 (JP); Itani, Hitoshi, Kobe-shi, Hyogo 654-01 (JP)
(74) Representative: Popp, Eugen, Dr.

(57) **Abstract**

The present invention provides a silicone rubber roller for electrophotography in which low grade siloxane and non-functional silicone oil have been substantially perfectly removed, and also provides a method of producing such a silicone rubber roller for electrophotography comprising the steps of crosslinking and molding, in the form of a roller, a molding material containing a silicone rubber compound in which the total concentration of the both substances above-mentioned is not greater than 5,000 ppm, and heatingly treating, under a vacuum, the roller thus molded.

The silicone rubber roller for electrophotography of the present invention does not contaminate a photoreceptor for electrophotography.

## Description

### BACKGROUND OF THE INVENTION

The present invention relates to a silicone rubber roller used in apparatus to which an electrophotographic method is applied, such as an electrostatic copying machine, a laser beam printer or the like.

The electrophotographic method uses a photoreceptor in which a conductive substrate is covered with an insulating photoconductor in the form of a film, and is adapted to form an image according to the following steps.

First, the surface of the photoreceptor is uniformly electrically charged in a dark place (charging step).

Then, the surface of the photoreceptor thus uniformly electrically charged is exposed to light in the form of an image. Then, pairs of electrons and electric holes are generated at the light-exposure part of the photoreceptor to neutralize electrostatic charge on the surface thereof. Accordingly, there is formed, on the surface of the photoreceptor, a distribution of electrostatic charge corresponding to the exposure image, i.e., a so-called electrostatic latent image (exposing step).

Then, the surface of the photoreceptor on which the electrostatic latent image is formed, is contacted with pigmented powder (toner). This causes the toner to electrostatically stick to the surface of the photoreceptor according to the electrostatic charge of the electrostatic latent image, so that the electrostatic latent image is converted into a toner image (developing step).

When an electric field is applied while the toner image is contacted with a transfer article such as paper or the like, the toner image is transferred to the surface of the transfer article (transferring step).

Then, when electric charge remaining on the surface of the photoreceptor is removed (destaticizing step) and toner remaining on the surface thereof is removed (cleaning step), one cycle of image formation according to the electrophotographic method is finished.

The toner image transferred to the surface of the transfer article, is thermally treated by hot rollers or the like and fixed on the surface of the transfer article (fixing step).

In the charging, transferring and destaticizing steps in the image formation according to the electrophotographic method, there is used corona discharge with the use of discharge wires installed in the vicinity of the surface of the photoreceptor. However, such corona discharge with the use of discharge wires presents the problem that a great amount of ozone is generated to provoke the pollution of the air, the deterioration of the photoreceptor and the like. Accordingly, as a charging method in which the problem above-mentioned is restrained, there has lately been put to practical use a contact charging method using a rubber roller coming in contact with the photoreceptor.

A rubber roller to be used for the contact charging method is required to be excellent in stability with respect to environmental variations, resistance to ozone, thermal stability and the like. To satisfy these requirements, there is considered the use of silicone rubber which is chemically and physically stable.

With a roller made of silicone rubber, an image with a very satisfactory quality would be produced at the stage immediately after the start of use. However, the silicone rubber roller presents the problem that, when used for a long period of time, the silicone rubber roller produces so-called touch memories that traces of the roller appear on the formed image, so that the image quality is gradually deteriorated.

The reason of the occurrence of such touch memories would be considered as follows. From the surface of the silicone rubber roller, there bleed (i) relatively low grade cyclic siloxane represented by a formula: (CH₃)₂SiOₙ (wherein n is in the range from about 3 to about 30), and (ii) non-functional silicone oil such as dimethyl silicone oil, methylphenyl silicone oil, methylhydrogen silicone oil or the like, and such substances are transferred to the photoreceptor.

More specifically, such low grade siloxane and non-functional silicone oil transferred to the photoreceptor change the quality of the insulating photoconductive material forming the photoreceptor, causing the photoreceptor to be deteriorated in fuction. Further, such substances are high in water repellency and insulation properties. Accordingly, the mere presence thereof prevents the photoreceptor from properly functioning. When a silicone rubber roller is contacted with a part of the photoreceptor for a relatively long period of time (for example, when the apparatus is halted or the like), such substances locally contaminate the photoreceptor, and the resulting contamination appears as roller traces (touch memories) on an image. Further, when a silicone rubber roller is used for a long period of time, the photoreceptor is contaminated in its entirety by such substances so that the storage concentration thereof is gradually increased. This results in gradual deterioration in image quality.

Bleeding of low grade siloxane and non-functional silicone oil is conventionally known. Therefore, there is commercially available a silicone rubber compound (containing silicone raw rubber as a base polymer to which a reinforcing filler and the like are added) of the grade that these substances have been already forcibly sucked and removed to a certain extent. For a normal application such as a touch panel or the like, the problem of silicone rubber as to bleeding can be solved by using a silicone rubber compound of the grade above-mentioned. However, for a roller for electrophotography, the removal of the substances to the extent of a commercially available compound is not sufficient, but trace amounts of residual low grade siloxane and non-functional silicone oil contaminate the photoreceptor as mentioned earlier.

It is known that low grade siloxane can be removed to a certain extent by heating at the time of crosslinking. For example, when a silicone rubber material of the millable type is subjected to secondary crosslinking at a temperature of about 180 to about 220°C for about 2 to about 5 hours, the low grade siloxane can be scattered and removed to a certain extent. However, the result is not still satisfactory. Under such heating conditions for the secondary crosslinking, it is hardly possible to remove low grade siloxane of which degree of polymerization is relatively high, and non-functional silicone oil. That is, only a heating treatment of the silicone rubber material under a normal pressure cannot perfectly prevent a photoreceptor from being contaminated.

Low grade siloxane and non-functional silicone oil can be removed by an extraction treatment using a solvent, but the resulting effect would be very slight. To obtain a sufficient removal effect by the extraction treatment alone, it takes much time. Accordingly, the extraction treatment is not practical in view of productivity.

### SUMMARY OF THE INVENTION

It is a main object of the present invention to provide a silicone rubber roller for electrophotography in which trace amounts of low grade siloxane and non-functional silicone oil that could not be so far removed by any of conventional methods, are substantially perfectly removed, and which does not contaminate a photoreceptor not only immediately after the start of use but also for a long period of time thereafter, and also to provide a method of producing such a silicone rubber roller.

To achieve the object above-mentioned, the inventors of the present invention have studied a variety of treating methods and found that, when silicone rubber was heatingly treated under a vacuum, it was possible to effectively suck and remove both low grade siloxane of which degree of polymerization was considerably high, and non-functional silicone oil, unlike by a heating treatment under a normal pressure, although it is not clear why such substances were sucked and removed. After further study, the inventors have found that, when a silicone rubber compound of the grade in which low grade siloxane and non-functional silicone oil had been already removed to a certain degree, was molded in the form of a roller and then heatingly treated under a vacuum, there was obtained a silicone rubber roller for electrophotography in which the low grade siloxane and non-functional silicone oil were substantially perfectly removed, so that the silicone rubber roller presented no possibility of a photoreceptor being contaminated not only immediately after the start of use but also for a long period of time thereafter. Based on this finding, the inventors have accomplished the present invention.

Thus, the present invention provides a silicone rubber roller for electrophotography made by crosslinking and molding, in the form of a roller, a molding material containing a rubber compound which comprises silicone raw rubber as a base polymer and in which the total concentration of low grade siloxane and non-functional silicone oil is not greater than 5000 ppm, and by heatingly treating the resulting roller under a vacuum.

In the silicone rubber roller for electrophotography of the present invention, the low grade siloxane and the non-functional silicone oil are substantially perfectly removed, so that the silicone rubber roller does not contaminate a photoreceptor not only immediately after the start of use but also for a long period of time thereafter. Thus, there can be put to practical use an image forming apparatus of the contact charging type which does not produce a great amount of ozone, thus preventing the pollution of the air, the deterioration of the photoreceptor and the like.

The silicone rubber roller for electrophotography of the present invention is produced by a method of the present invention comprising the steps of (i) crosslinking and molding, in the form of a roller, a molding material containing a rubber compound which comprises silicone raw rubber as a base polymer and in which the total concentration of low grade siloxane and non-functional silicone oil is not greater than 5,000 ppm, and (ii) heatingly treating the resulting roller under a vacuum.

According to the production method of the present invention, the silicone rubber roller for electrophotography of the present invention can be readily and efficiently produced.

### BRIEF DESCRIPTION OF THE DRAWINGS

Figure 1 is a graph showing the relationship between the concentration of low grade siloxane of which degree of polymerization is in the range from 4 to 25, and roller treating methods; and
Figure 2 is a graph showing the variations of the concentration of low grade siloxane with the passage of time in a roller of Comparative Example 2.

### DETAILED DESCRIPTION OF THE INVENTION

The molding material to be used in the present invention may be either liquidous or millable, but there may be suitably used a molding material of the millable type which can be kneaded such that a roller can be produced according to steps similar to those for a conventional rubber material. A molding material of the millable type is prepared by blending a commercially available silicone rubber compound which contains (i) gel-like silicone raw rubber presenting a degree of polymerization from about 5,000 to about 10,000 (a linear organopolysiloxane polymer) as a base, (ii) a reinforcing filler of the silica anhydride type such as aerosil, (iii) a dispersion accelerator and the like, with a variety of additives such as a crosslinking agent, a catalyst, a non-reinforcing (extender) filler, a resistance controlling agent and the like, and by melting and kneading the materials thus blended with a roll mill or the like. Preferably, the silicone rubber roller for electrophotography of the present invention is made in the form of an elastic sponge. In this connection, the molding material may contain a foaming agent adapted to be foamed when heated at the time of primary or secondary crosslinking. These additives may be added in an amount similar to that conventionally added.

As the silicone raw rubber serving as a base polymer, there may be used any of conventional rubbers of a variety of types such as a dimethyl silicone type, a methyl vinyl silicone type, a methyl phenyl vinyl silicone type, a fluorosilicone type and the like.

As mentioned above, the total concentration of the low grade siloxane and the non-functional silicone oil contained in the silicone rubber compound is limited to 5,000 ppm or less. If the total concentration exceeds 5,000 ppm, these substances cannot be perfectly removed only by a heating treatment under a vacuum after molding. That is, immediately after the start of use, the roller does not contaminate a photoreceptor, but the low grade siloxane and the non-functional silicone oil remaining inside of the roller will gradually bleed on the surface of the roller to ultimately contaminate the photoreceptor. Thus, the removal effect cannot be assured.

To adjust the total concentration of these substances contained in the silicone rubber compound to 5,000 ppm or less, there are available a variety of methods including a method of treating silicone raw rubber under a vacuum to forcibly suck and remove these substances. However, as mentioned earlier, there is commercially available a compound in which the total concentration of the both substances has been already adjusted in the range above-mentioned. It is therefore preferable to use such a compound as it is in view of productivity and cost. Examples of the commercially available silicone rubber compound in which the total concentration of the low grade siloxane and the non-functional silicone oil has been adjusted in the range above-mentioned, include X-30-1807U (a conductive silicone compound) and X-30-1807M (an insulating silicone compound), both manufactured by Shin-Etsu Chemical Co., Ltd.

As the crosslinking agent, there can be used, for example, a crosslinking agent of the organic peroxide type. Examples of the crosslinking agent of the organic peroxide type include benzoyl peroxide, bis-2,4-dichlorobenzoyl peroxide, dicumyl peroxide, di-tert-butyl peroxide, p-monochlorbenzoyl peroxide, 2,5-dimethyl-2,5-bis-(tert-butylperoxy)hexane tert-butylcumyl peroxide and the like. Also, an aliphatic acid azo compound, sulfur or the like can be used as the crosslinking agent.

Example of the extender filler include inorganic fillers such as a reinforcing filler, calcium carbonate, hard clay, barium sulfate, talc, mica, asbestos, graphite and the like, and organic fillers such as regenerated rubber, powdery rubber, asphalts, styrene resin, glue and the like.

For producing a silicone rubber roller for electrophotography from a molding material containing the components above-mentioned, there is adopted the production method of the present invention comprising the steps of crosslinking and molding the molding material in the form of a roller, and heatingly treating the resulting roller under a vacuum.

To crosslink and mold the molding material in the form of a roller, there is adopted a molding method similar to a conventional one. For example, when the molding material is of the millable type, the molding material may be simultaneously molded and primarily crosslinked by compression molding, injection molding, transfer molding or the like, and then secondarily crosslinked with the use of a hot drier or the like, or the molding material may be molded in the form of a roller by calender roll molding, extrusion molding or the like, primarily crosslinked by a conventional crosslinking method such as an HAV (hot atmospheric vulcanization) method or the like, and then secondarily crosslinked with the use of a hot drier or the like. Alternatively, a heating treatment under a vacuum, to be discussed in the following, may be conducted instead of the secondary crosslinking.

To heatingly treat a molded roller under a vacuum, there may be used apparatus such as a vacuum oven or the like.

Conditions for a heating treatment under a vacuum are not limited to specific ones, but such a treatment may be preferably conducted under the conditions that the ultimate degree of vacuum is not greater than 5 mmHg, the heating temperature is from about 150 to about 250°C, and the treating period of time is from about 3 to about 25 hours. If the ultimate degree of vacuum considerably exceeds 5 mmHg, the heating temperature is below 150°C or the treating period of time is considerably shorter than 3 hours, this involves the likelihood that the low grade siloxane and the non-functional silicone oil cannot be sufficiently removed. If the heating temperature considerably exceeds 250°C or the treating period of time is longer than 25 hours, this not only wastes energy, but also may deteriorate or change the roller in quality. As to the heating temperature, it is the best to directly measure the heating temperature itself. However, if the heating temperature cannot be directly measured, the temperature of the wall or the like of a furnace used for the treatment may be used as the heating temperature.

By such a heating treatment under a vacuum, there is accomplished the silicone rubber roller for electrophotography of the present invention in which the low grade siloxane and the non-functional silicone oil have been substantially perfectly removed, thus preventing a photoreceptor from being contaminated.

According to the present invention, a molded roller may be subjected to a solvent extraction treatment before or after the heating treatment under a vacuum. When the roller is subjected to a solvent extraction treatment, it is possible to securely remove the low grade siloxane and the non-functional silicone oil presenting a relatively great molecular weight which cannot possibly be removed only by a heating treatment under a vacuum. Thus, the residual concentrations of these substances can be further lowered.

As a solvent, there may be used any of a variety of solvents in which the low grade siloxane and the non-functional silicone oil can be dissolved. Preferably, there may be used acetone, hexane, ethyl acetate, toluene or the like.

In the silicone rubber roller for electrophotography of the present invention produced by the production method of the present invention, the low grade siloxane and the non-functional silicone oil have been substantially perfectly removed by a heating treatment under a vacuum and therefore hardly remained. Accordingly, even though the silicone rubber roller is disposed as coming in contact with the surface of a photoreceptor, there is no possibility of the photoreceptor being contaminated not only immediately after the start of use of the silicone rubber roller, but also for a long period of time thereafter. Accordingly, in an image forming apparatus such as an electrostatic copying machine, a laser beam printer or the like, the silicone rubber roller for electrophotography of the present invention can be suitably used as a roller of the contact charging type to be disposed as coming in contact with the surface of a photoreceptor, such as a charging roller for uniformly electrically charging the surface of the photoreceptor, a transferring roller for transferring a toner image formed on the surface of the photoreceptor to a transfer article such as paper or the like, a destaticizer roller for removing residual electric charge on the surface of the photoreceptor.

When the silicone rubber roller for electrophotography of the present invention is used as a roller of the contact charging type, the resistance value is preferably in the range from 10³ to 10¹⁰ ohms. If the resistance value is less than 10³ ohms when the roller is used as a charging roller for example, the electric charge once charged on a photoreceptor is possibly sucked by the roller, thus failing to electrically charge the photoreceptor to a predetermined value of elctric charge. If the resistance value exceeds 10¹⁰ ohms, a voltage applied for electrically charging the photoreceptor to a predetermined value of electric charge is increased. This requires a power supply with a higher voltage, thus increasing the image forming apparatus in size.

To maintain the resistance value of the silicone rubber roller for electrophotography in the range above-mentioned, there may be jointly used a conductive silicone rubber compound and an insulating silicone rubber compound with the blending proportion thereof suitably adjusted, and the amount of a resistance adjusting agent as an additive may be suitably adjusted.

Preferably, the silicone rubber roller for electrophotography of the present invention is made in the form of an elastic sponge in order to increase the contact area thereof with a photoreceptor to stabilize the electric charge characteristics thereof.

The silicone rubber roller for electrophotography of the present invention may be applied to, in addition to a roller of the contact charging type, a paper feeding roller, a delivery roller or the like which does not come in direct contact with the surface of a photoreceptor, but of which components might be transferred to the photoreceptor with paper serving as a medium, causing the photoreceptor to be contaminated.

As thus discussed, according to the present invention, a silicone rubber compound of the grade that low grade siloxane and non-functional silicone oil have been already removed to a certain extent, is used and molded in the form of a roller and then heatingly treated under a vacuum to substantially perfectly remove the low grade siloxane and the non-functional silicone oil. It is therefore possible to produce a silicone rubber roller for electrophotography which does not contaminate a photoreceptor not only immediately after the start of use but also for a long period of time thereafter. Thus, according to the present invention, it is possible to put, to a practical use, an image forming apparatus of the contact charging type which does not produce a great amount of ozone to prevent the pollution of the air, the deterioration of a photoreceptor or the like.

### EXAMPLES

The following will discuss the present invention with reference to Examples and Comparative Examples.

### Example 1

60 Parts by weight of a conductive silicone rubber compound in which the total concentration of low grade siloxane and non-functional silicone oil had been adjusted to not greater than 5,000 ppm (X-30-1807U manufactured by Shin-Etsu Chemical Co., Ltd.), and 40 parts by weight of an insulating silicone rubber compound in which the total concentration of the substances above-mentioned had been adjusted to not greater than 5,000 ppm (X-30-1807M manufactured by Shin-Etsu Chemical Co., Ltd.) were mixed with the following additives, and the resulting mixture was molten and kneaded with a roll mill to prepare a molding material of the millable type.

| Additive | | Adding Amount |
|---|---|---|
| Foaming agent: | X-30-1847U | 5 phr |
| Crosslinking agent: | X-30-1848U | 2.5 phr |
| | X-30-1849U | 2.0 phr |
| Catalyst: | PL-2 | 0.03 phr |
| Catalyst control agent: | X-30-253 | 0.03 phr |

(All the additives above-mentioned are manufactured by Shin-Etsu Chemical Co., Ltd. and respectively represented in terms of the product Nos. thereof.)

The molding material above-mentioned was extruded and molded in the form of a roller and primarily crosslinked at 200°C for 30 minutes according to the HAV method, thus molding a roller.

The roller thus molded was simultaneously secondarily crosslinked and heatingly treated under a vacuum for six hours under the conditions of the ultimate degree of vacuum of 2 mmHg and the temperature of 240°C with the use of a vacuum oven (which is a vacuum thermostat drier DP61 manufactured by Yamato Kagaku Co., Ltd.) to produce a silicone rubber roller for electrophotography.

### Examples 2 to 6

With the use of a molding material identical with that used in Example 1, rollers were primarily crosslinked and molded under conditions similar to those used in Example 1. With the use of a normal-pressure thermostat drier (DNF64 manufactured by Yamato Kagaku Co., Ltd.), the rollers thus molded were secondarily crosslinked at 200°C for 4 hours according to the HAV method, and then heatingly treated under a vacuum with the use of a vacuum oven identical with that used in Example 1 under the respective conditions shown in Table 1, thus producing silicone rubber rollers for electrophotography.

**Table 1**

| | Degree of Vacuum (mmHg) | Temperature (°C) | Time (hr) |
|---|---|---|---|
| Example 2 | 2 | 240 | 24 |
| Example 3 | 2 | 240 | 6 |
| Example 4 | 2 | 240 | 4 |
| Example 5 | 2 | 200 | 6 |
| Example 6 | 2 | 200 | 4 |

### Comparative Example 1

60 Parts by weight of a conductive silicone rubber compound in which the total concentration of low grade siloxane and non-functional silicone oil had not been adjusted to not greater than 5,000 ppm (X-30-289U manufactured by Shin-Etsu Chemical Co., Ltd.), and 40 parts by weight of an insulating silicone rubber compound in which the total concentration of the both substances above-mentioned had not been adjusted to not greater than 5,000 ppm (KE-1551U manufactured by Shin-Etsu Chemical Co., Ltd.) were mixed with the following additives, and the resulting mixture was molten and kneaded with a roll mill to prepare a molding material of the millable type.

| Additive | | Adding Amount |
|---|---|---|
| Foaming agent: | KEP-13 | 5 phr |
| Crosslinking agent: | C-3M | 2.5 phr |
| | HC-101 | 2.0 phr |
| Catalyst: | PL-2 | 0.03 phr |
| Catalyst control agent: | X-30-253 | 0.03 phr |

(All the additives above-mentioned are manufactured by Shin-Etsu Chemical Co., Ltd. and respectively represented in terms of the product Nos. thereof.)

With the use of the molding material above-mentioned, a roller was primarily crosslinked and molded under the same conditions as those used in Example 1. With the use of a normal-pressure thermostat drier (DNF64 manufactured by Yamato Kagaku Co., Ltd.), the roller thus molded was not subjected to a heating treatment under a vacuum, but was secondarily crosslinked at 200°C for four hours under a normal pressure according to the HAV method, thus producing a silicone rubber roller for electrophotography.

### Comparative Example 2

With the use of a molding material identical with that used in Comparative Example 1, a roller was primarily crosslinked and molded under the same conditions as those used in Example 1. The roller thus molded was secondarily crosslinked and heatingly treated under a vacuum under the same conditions as those used in Example 1, thus producing a silicone rubber roller for electrophotography.

### Comparative Example 3

With the use of a molding material identical with that used in Example 1, a roller was primarily crosslinked and molded under the same conditions as those used in Comparative Example 1. The roller thus molded was not subjected to a heating treatment under a vacuum, but was secondarily crosslinked under a normal pressure under the same conditions as those used in Comparative Example 1, thus producing a silicone rubber roller for electrophotography.

### Comparative Example 4

A silicone rubber roller for electrophotography was produced in the same manner as in Comparative Example 3 except that the temperature and time in the conditions for secondary crosslinking under a normal pressure were respectively changed to 250°c and 4 hours.

### Comparative Example 5

With the use of a molding material identical with that used in Example 1, a roller was primarily crosslinked and molded under the same conditions as those used in Example 1. The roller thus molded was not subjected to a heating treatment under a vacuum, but was washed for 10 minutes with trichloroethane heated to 80°C, thus producing a silicone rubber roller for electrophotography.

### Comparative Examples 6 to 10

With the use of a molding material identical with that used in Example 1, rollers were primarily crosslinked and molded under conditions similar to those used in Example 1. The rollers thus molded were not subjected to a heating treatment under a vacuum, but were subjected, as immersed in respective solvents shown in Table 2, to an extraction treatment at an ambient temperature for 76 hours, thus producing silicone rubber rollers for electrophotography.

**Table 2**

| | Solvent |
|---|---|
| Comparative Example 6 | Acetone |
| Comparative Example 7 | Hexane |
| Comparative Example 8 | Ethyl acetate |
| Comparative Example 9 | Toluene |
| Comparative Example 10 | Ethanole |

As pressingly contacted with the photoreceptor of a laser beam printer (Laser Shot Printer A404 manufactured by CANON INC.), each of the silicone rubber rollers for electrophotography of Examples and Comparative Examples above-mentioned was left for 72 hours at an environmental temperature of 23.5°C, an environmental humidity of 55%RH. Thereafter, a test chart in black solid was continuously printed out by five pieces. A test area of 5 mm² was set on that part of each of the images thus formed which corresponded to that part of the surface of each photoreceptor with which each roller was pressingly contacted. The brightness data of the test areas thus set were measured with an image processing apparatus ("Personal Image Analysis System LA-555" manufactured by PIAS Co., Ltd.) and classified in 256 steps from the brightness 0 (black) to brightness 255 (white). Based on the following evaluation standards, the degree of contamination of photoreceptor was evaluated for each roller.
- O :: Average brightness from 0 to 62 (No touch memories)
- △ :: Average brightness from 63 to 68 (Slight touch memories)
- X :: Average brightness from 69 to 255 (Apparent touch memories)
The results are shown in Table 3 A and B.

**Table 3A**

| Test Chart | | | | | |
|---|---|---|---|---|---|
| | First piece | Second piece | Third piece | Fourth piece | Fifth piece |
| Example 1 | △ | O | O | O | O |
| Example 2 | △ | △ | O | O | O |
| Example 3 | O | O | O | O | O |
| Example 4 | O | O | O | O | O |
| Example 5 | △ | O | O | O | O |
| Example 6 | O | O | O | O | O |
| Comparative Example 1 | X | X | X | △ | △ |
| Comparative Example 1 | O | O | O | O | O |

**Table 3B**

| Test Chart | | | | | |
|---|---|---|---|---|---|
| | First piece | Second piece | Third piece | Fourth piece | Fifth piece |
| Comparative Example 3 | X | X | △ | O | O |
| Compartive Example 4 | X | X | △ | O | O |
| Comparative Example 5 | X | X | △ | O | O |
| Comparative Example 6 | X | X | △ | O | O |
| Comparative Example 7 | △ | △ | O | O | O |
| Comparative Example 8 | X | X | X | △ | △ |
| Comparative Example 9 | X | X | O | O | O |
| Comparative Example 10 | X | X | △ | O | O |

As apparent from Table 3 A and B, each of the rollers of Comparative Examples 1, 3, 4 which was not subjected to a heating treatment under a vacuum but was merely secondarily crosslinked under a normal pressure, the roller of Comparative Example 5 which was not subjected to a heating treatment under a vacuum but merely washed with a solvent, and each of the rollers of Comparative Examples 6, 8, 9, 10 which was not subjected to a heating treatment under a vacuum but was merely subjected to a solvent extraction treatment, contaminated the photoreceptor regardless of the total concentration of the low grade siloxane and the non-functional silicone oil in the silicone raw rubber. Out of Comparative Examples which were not subjected to a heating treatment under a vacuum but merely subjected to a solvent extraction treatment, Comparative Example 7 using hexane as a solvent did not contaminate the photoreceptor so much. However, it was made sure that Comparative Example 7 was not practical because the treatment took time as much as 76 hours.

On the other hand, each of the rollers of Examples 1 to 6 which was made from the molding material containing the silicone rubber compound in which the total concentration of the low grade siloxane and the non-functional silicone oil had been adjusted to not greater than 5,000 ppm, and in which the roller as molded was heatingly treated under a vacuum, did not contaminate the photoreceptor regardless of the conditions for the heating treatment under a vacuum and regardless of execution or non-execution of secondary crosslinking under a normal pressure.

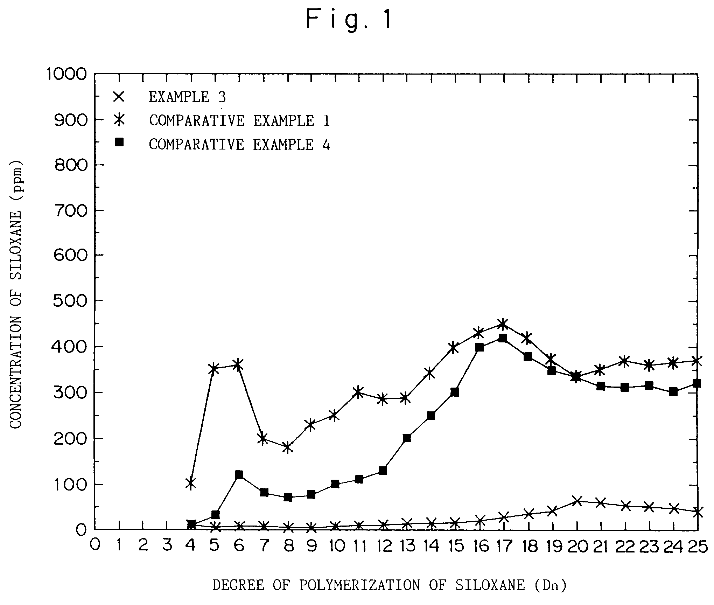

By a gas chromatography method, the rollers of Example 3 (heating treatment under a vacuum), Comparative Example 1 (heating treatment under a normal pressure) and Comparative Example 4 (solvent extraction treatment) were measured as to the concentration of the low grade siloxane of which degree of polymerization was in the range from 4 to 25. As shown in Fig. 1, it was made sure that, as compared with the rollers of Comparative Examples 1, 4, the roller of Example 3 was remarkably low in the concentration of the low grade siloxane.

From the results above-mentioned, it is understood that, to prevent a photoreceptor from being contaminated, it is most effective that a roller as molded is heatingly treated under a vacuum.

The roller of Comparative Example 2 which was made from the molding material containing a silicone rubber compound in which the total concentration of the low grade siloxane and the non-functional silicone oil had not been adjusted to not greater than 5,000 ppm, and in which the roller as molded was heatingly treated under a vacuum, did not contaminate the photoreceptor likewise the rollers of Examples 1 to 6. Then, a test similar to the test above-mentioned was conducted on the roller of Comparative Example 2 and the rollers of Examples 2, 3, 4, after all the rollers had been left for 18 days. As a result, each of the rollers of Examples 2, 3, 4 did not contaminate the photoreceptor, but the roller of Comparative Example 2 contaminated the photoreceptor, as shown in Table 4.

**Table 4**

| Test Chart | | | | | |
|---|---|---|---|---|---|
| | First piece | Second piece | Third piece | Fourth piece | Fifth piece |
| Example 2 | △ | △ | O | O | O |
| Example 3 | O | O | O | O | O |
| Example 4 | O | O | O | O | O |
| Comparative Example 2 | X | △ | △ | O | O |

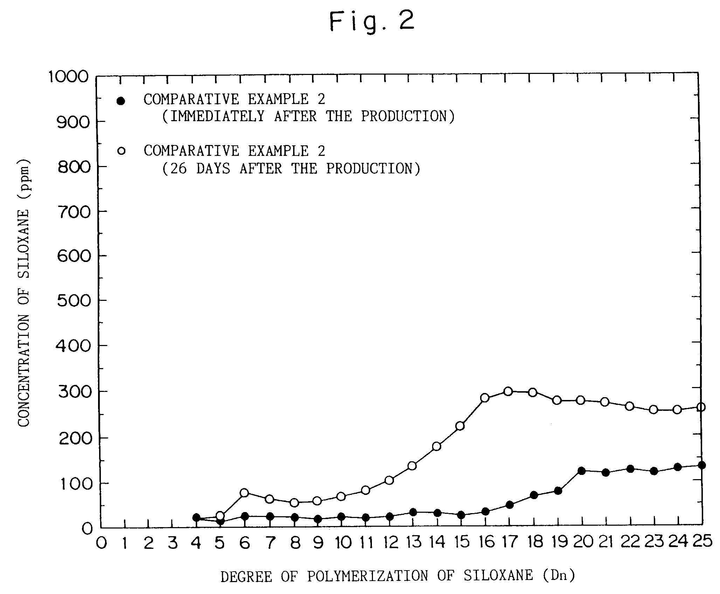

By a gas chromatography method, the surface of the roller of Comparative Example 2 was measured as to the concentration of the low grade siloxane of which degree of polymerization was in the range from 4 to 25, immediately after the production and 26 days after the production. As shown in Fig. 2, it is made sure that the concentration of the low grade siloxane is increased with the passage of time.

From the results above-mentioned, it is found that, when there is used a molding material containing a silicone rubber compound in which the total concentration of the both substances has not been adjusted to not greater than 5,000 ppm, the both substances cannot be perfectly removed only by a heating treatment under a vacuum and that the low grade siloxane and the non-functional silicone oil remaining inside of the roller gradually bleed on the surface thereof, so that the removal effect is lost.

It is also made sure that, only when there is used a molding material containing a silicone rubber compound in which the total concentration of the both substances has been adjusted to not greater than 5,000 ppm, and a molded roller is heatingly treated under a vacuum, the resulting roller does not contaminate a photoreceptor for a long period of time.

### Examples 7, 8 and Comparative Examples 11 to 15

With the use of a molding material identical with that used in Example 1, rollers were primarily crosslinked and molded under conditions similar to those used in Example 1. With the use of a normal-pressure thermostat drier (DNF64 manufactured by Yamato Kagaku Co., Ltd.), the rollers thus molded were secondarily crosslinked at 200°C for 4 hours according to the HAV method, and then heatingly treated under a vacuum with the use of a vacuum oven identical with that used in Example 1 under the respective conditions shown in Table 5, thus producing silicone rubber rollers for electrophotography.

**Table 5**

| | Degree of Vacuum (mmHg) | Temperature (°C) | Time (hr) |
|---|---|---|---|
| Example 7 | 5 | 240 | 6 |
| Comparative Example 11 | 10 | 240 | 6 |
| Example 8 | 2 | 150 | 6 |
| Comparative Example 12 | 2 | 100 | 6 |
| Comparative Example 13 | 2 | 300 | 6 |
| Comparative Example 14 | 2 | 240 | 1 |
| Comparative Example 15 | 2 | 240 | 30 |

With the use of the silicone rubber rollers for electrophotography of Examples 7, 8 and Comparative Examples 11 to 15, images were formed in a manner similar to the manner mentioned earlier and then checked for touch memories. Based on the evaluation standards mentioned earlier, the degree of contamination of photoreceptor was evaluated for each roller. It is noted that the roller of Comparative Example 13 was deformed at the time of the heating treatment under a vacuum, so that the degree of contamination of the photoreceptor could not be evaluated.

The results are shown in Table 6.

**Table 6**

| Test Chart | | | | | |
|---|---|---|---|---|---|
| | First piece | Second piece | Third piece | Fourth piece | Fifth piece |
| Example 7 | △ | O | O | O | O |
| Comparative Example 11 | X | △ | O | O | O |
| Example 8 | △ | △ | O | O | O |
| Comparative Example 12 | X | △ | △ | O | O |
| Comparative Example 13 | - | - | - | - | - |
| Comparative Example 14 | △ | △ | △ | O | O |
| Comparative Example 15 | △ | △ | △ | O | O |

When comparison was made of the results of Example 7 and Comparative Example 11 in Table 6 and the results of Example 3 in Table 3 A, the contamination of the photoreceptor with the use of each of the rollers of Examples 3, 7 heatingly treated under a vacuum of which ultimate degree had been 5 mmHg, was less than that of the photoreceptor with the use of the roller of Comparative Example 11 heatingly treated under a vacuum of which ultimate degree had been 10 mmHg. Thus, it was understood that the ultimate degree of vacuum at the time of the heating treatment under a vacuum was preferably not greater than 5 mmHg. When the results of Example 3 were compared with the results of Example 7, the contamination of the photoreceptor with the use of the roller of Example 3 treated under a vacuum of which ultimate degree had been 2 mmHg, was less than that of the photoreceptor with the use of the roller of Example 7 treated under a vacuum of which ultimate degree had been 5 mmHg. Thus, it was also understood that the ultimate degree of vacuum was desirably smaller, even though it was in the range above-mentioned.

When comparison was made of the results of Example 8 and Comparative Examples 12, 13 in Table 6 and the results of Examples 3, 5 in Table 3 A, the contamination of the photoreceptor with the use of each of the rollers of Examples 3, 5, 8 heatingly treated under a vacuum at temperatures of not less than 150°C, was less than that of the photoreceptor with the use of the roller of Comparative Example 12 treated at a temperature of 100°C. Thus, it was understood that the temperature of the heating treatment under a vacuum was preferably not less than 150°C. The roller of Comparative Example 13 heatingly treated under a vacuum at a temperature of 300°C, was deformed. Thus, it was understood that the temperature of the heating treatment under a vacuum was preferably not greater than 250°C. When comparison was made of the results of Examples 3, 5, 8, the higher the treating temperature was, the less the contamination of the photoreceptor. It was also understood that the treating temperature was desirably higher, even though it was in the range above-mentioned.

When the results of Comparative Examples 14, 15 were compared with the results of Examples 3, 4, 5 in Table 3 A, the contamination of the photoreceptor with the use of each of Examples 3, 4, 5 heatingly treated under a vacuum within a period of time from 3 to 25 hours, was less than that of the photoreceptor with the use of each of the rollers of Comparative Examples 14 and 15 treated for 1 hour and 30 hours, respectively. Thus, it was found that the period of time of the heating treatment under a vacuum was preferable in the range from 3 to 25 hours.

### Example 9

The silicone rubber roller for electrophotography produced in Example 2 was subjected, as immersed in hexane, to an extraction treatment at an ambient temperature for 3 hours.

With the use of the silicone rubber roller thus treated, images were formed in a manner similar to the manner mentioned earlier and then checked for touch memories. Based on the evaluation standards mentioned earlier, the degree of contamination of photoreceptor was evaluated for this roller. Together with the results of Example 2, the results of Example 9 are shown in Table 7.

**Table 7**

| Test Chart | | | | | |
|---|---|---|---|---|---|
| | First piece | Second piece | Third piece | Fourth piece | Fifth piece |
| Example 9 | O | O | O | O | O |
| Example 2 | △ | △ | O | O | O |

From the results shown in Table 7, it was found that the joint use of a heating treatment under a vacuum and a solvent extraction treatment further reduced the photoreceptor in contamination.

## Claims

1. A silicone rubber roller suitable for use in electrophotographic apparatus obtained by crosslinking and molding, in the form of a roller, a molding material containing a rubber compound which comprises silicone raw rubber as a base polymer and in which the total concentration of low grade siloxane and non-functional silicone oil is not greater than 5,000 ppm, and by heat treating the thus molded roller under vacuum.

2. A silicone rubber roller according to claim 1, wherein the roller after molding is subjected to a solvent extraction treatment before or after said heat treating under vacuum.

3. A silicone rubber roller according to claim 1 or 2, wherein the molding material comprises a foaming agent and the roller has a sponge-like character.

4. A silicone rubber roller according to claim 1, 2 or 3, wherein the rubber compound comprises a conductive rubber compound and an insulating rubber compound to adjust the electrical resistance value of the roller.

5. A silicone rubber roller according to claim 4, wherein the electrical resistance value of the roller is in the range of 10³ to 10¹⁰ ohms.

6. A method of producing a silicone rubber roller suitable for use in electrophotographic apparatus comprising the steps of:
crosslinking and molding, in the form of a roller, a molding material containing a rubber compound which comprises silicone raw rubber as a base polymer and in which the total concentration of low grade siloxane and non-functional silicone oil is not greater than 5,000 ppm; and
heat treating the thus molded roller under vacuum.

7. A method of producing a silicone rubber roller according to claim 6, wherein the degree of vacuum during heat treatment under vacuum is not greater than 5 mmHg.

8. A method of producing a silicone rubber roller according to claim 6 or 7, wherein the temperature during heat treatment under vacuum is in the range of 150 to 250°C.

9. A method of producing a silicone rubber roller according to claim 6, 7 or 8, wherein the period of time for the heat treatment under vacuum is in the range of 3 to 25 hours.

10. A method of producing a silicone rubber roller according to one of the claims 6 to 9, wherein the crosslinked and molded roller is secondarily crosslinked simultaneously with the heat treatment under vacuum.

11. A method of producing a silicone rubber roller according to one of the claims 6 to 10, wherein the molding material is of the millable type.

12. A method of producing a silicone rubber roller according to one of the claims 6 to 11, wherein, after molded, the roller is subjected to a solvent extraction treatment before or after said roller is heat treated under vacuum.

13. A method of producing a silicone rubber roller according to one of the claims 6 to 12, wherein the molding material comprises a foaming agent adapted to be foamed by heat generated at the time of crosslinking and molding, so that the roller is foam-molded to have a sponge-like character.

14. A method of producing a silicone rubber roller according to one of the claims 6 to 13, wherein the rubber compound comprises a conductive rubber compound and an insulating rubber compound to adjust the electrical resistance value of the roller.

15. A method of producing a silicone rubber roller according to claim 14, wherein the electrical resistance value of the roller is adjusted in the range of 10³ to 10¹⁰ ohms.

16. An electrophotographic apparatus comprising a photoreceptor, the apparatus further comprising the roller of one of the claims 1 to 5 or the roller obtained by the method of one of the claims 6 to 15 as a charging roller, said roller disposed in said apparatus to contact and charge the surface of the photoreceptor.
